# EUROPÄISCHE PATENTSCHRIFT

(11) **EP 2 689 990 B1**
(45) Veröffentlichungstag und Bekanntmachung des Hinweises auf die Patenterteilung: **30.03.2016**
(21) Anmeldenummer: 13173156.4
(22) Anmeldetag: 21.06.2013
(51) Int. Cl.: B62D 15/02, B60Q 9/00, B60R 21/0132, B60W 30/06, B60W 40/06

(54) **Verfahren und Vorrichtung zum Erkennen einer Bordsteinüberfahrt**
Method and device for recognising when a kerbstone has been driven over
Procédé et dispositif de détection d'un dépassement de bordure

(30) Priorität: 26.07.2012 DE 102012014809
(43) Veröffentlichungstag der Anmeldung: 29.01.2014
(73) Patentinhaber: Volkswagen Aktiengesellschaft, 38440 Wolfsburg (DE)
(72) Erfinder: Hüger, Philipp, 38471 Rühen (DE); Brandt, Fabian, 26419 Schortens (DE)

(56) Entgegenhaltungen:
- EP-A1- 1 642 767
- EP-A1- 2 098 844
- DE-A1-102009 047 373
- JP-A- 2010 241 320

## Beschreibung

Die Erfindung betrifft ein Verfahren zum Erkennen einer Bordsteinüberfahrt während eines Rangiermanövers, insbesondere eines Einparkvorgangs, eines Kraftfahrzeugs gemäß dem Oberbegriff des Anspruchs 1, eine Vorrichtung zum Erkennen einer Bordsteinüberfahrt gemäß dem Oberbegriff des Anspruchs 6, ein Verfahren zur odometrischen Berechnung der Fahrzeugposition bei der Überfahrung eines Bordsteins gemäß dem Oberbegriff des Anspruchs 7 sowie ein entsprechender Parklenkassistent gemäß dem Oberbegriff des Anspruchs 10.

Bei Einparkmanövern, ob diese von einem Fahrer vollständig autonom, mittels der Unterstützung durch eine Parklenksystem oder durch ein automatisches Einparksystem ausgeführt werden, kommt es häufig vor, dass die Parklücke zur Außenseite hin durch einen Bordstein begrenzt ist, oder dass die Parklücke erhoben angeordnet ist, mit anderen Worten, es muss der Bordstein zum Erreichen der Parklücke überfahren werden und der Bordstein ist sozusagen innenseitig angeordnet. Es sind auch Situationen möglich, bei denen die Parklücke beidseitig von Bordsteinen begrenzt ist, wobei in diesem Fall der innenseitige Bordstein meist niedriger als der außenseitige Bordstein ist. Dabei bedeutet innenseitig die Begrenzung der Parklücke zur Fahrbahn hin, während unter außenseitig die äußere Begrenzung beispielsweise zu einem Rad- oder Fußweg hin zu verstehen ist.

Ein Überfahren eines Bordsteins bei einem Einparkvorgang, ob dies beabsichtigt ist oder nicht, ist immer mit entsprechender Vorsicht auszuführen, um Schädigungen des den Bordstein überfahrenden Reifens oder sogar der Felge zu vermeiden.

Aus der Druckschrift DE 10 2009 046 158 A1 ist ein Verfahren zur Erkennung von Objekten mit geringer Höhe mit einem System zur Hinderniserkennung in Fahrzeugen zu entnehmen, wobei das System zur Hinderniserkennung Abstandssensoren zur Ermittlung der Abstände zu Objekten und Mittel zur deren Auswertung aufweist. Dabei wird der Abstand zu einem Objekt kontinuierlich in vorgegebenen Intervallen erfasst und geprüft, ob das Objekt bei einem Unterschreiten eines vorgegebenen Mindestabstandes von den Sensoren weiter erfasst wird oder aus dem Detektionsbereich der Sensoren verschwindet. Objekte, die aus dem Erfassungsbereich des Abstandssensors verschwinden, werden als Objekte mit geringer Höhe klassifiziert. Wird während eines Einparkvorgangs ein Objekt geringer Höhe erkannt, so wird eine geeignete Trajektorie berechnet, die es dem Parklenkassistenten ermöglicht, das Objekt geringer Höhe ohne Beschädigung des Fahrzeugs zu überfahren.

Das Dokument EP1642767 A1 ist als nächstliegender Stand der Technik nach dem Oberbegriff des Anspruchs 1 zu sehen.

Aus der DE 10 2007 061 234 A1 ist ein Verfahren zum Anpassen der Führung eines Kraftfahrzeugs bei einem Einparkvorgang in einem Bereich bekannt, der mindestens ein Hindernis aufweist. Dabei wird mit einer Sensorik das Höhenprofil entlang einer beabsichtigten Trajektorie ermittelt, der das Fahrzeug bei dem Vorgang folgen soll, und es erfolgt ein Anpassen der Geschwindigkeit und der Beschleunigung des Fahrzeugs an das ermittelte Höhenprofil.

Die Druckschrift DE 10 2009 003 216 A1 beschreibt ein Fahrerassistenzsystem, welches ein Höhenprofil einer Fahrbahnoberfläche einlang einer Einparktrajektorie prädiktiv erfasst, wobei das Höhenprofil mittels einer geeigneten Sensorik erstellt wird. Ergibt das Höhenprofil, dass die Einparktrajektorie über einen Bordstein führt, so wird die Einparktrajektorie derart angepasst, dass der Bordstein in einem vorbestimmten Winkel überfahren wird.

Ferner offenbart die Druckschrift DE 10 2009 047 248 A1 ein Verfahren zur Unterstützung eines Fahrer beim Überfahren eines überfahrbaren Bordsteins mit einer geringen Geschwindigkeit, beispielsweise bei einem Einparkmanöver. Dabei wird ein hohes Drehmoment zur Überwindung des Bordsteins an die Räder abgegeben und überprüft, ob der Bordstein überwunden worden ist. Ist dies der Fall, so wird das Drehmoment reduziert oder ein Bremsmoment aufgebracht, um ein plötzliches Beschleunigen des Fahrzeugs nach der Überwindung des Bordsteins zu vermeiden. Die Bordsteinüberfahrt kann dabei erkannt werden durch eine Änderung des Drucks des entsprechenden Reifens, eine Änderung des Radfederwegs, eine Änderung des Nickwinkels oder eine Erkennung der Position des Bordsteins durch eine Sensorik und eine anschließende Abschätzung der Überfahrt durch eine Odometrie.

Das Überfahren eines Bordsteins unter Zuhilfenahme eines Parklenkassistenten führt zu einer fehlerhaften Odometrie, da die durch die Odometrie ermittelte Position des Fahrzeugs nicht mehr der realen Position entspricht. Als Folge davon kann das Fahrzeug an einer falschen Position parken oder der Parkvorgang führt zu einem schiefen Endzustand in der Parklücke. Allerdings bedingt die Erkennung einer Überfahrt eines Bordsteins eine zusätzliche Sensorik, wie Drucksensoren in den Reifen zur Bestimmung eines Druckabfalls oder eines Sensor zur Bestimmung des Federweges, was zusätzliche Kosten verursacht.

Der Erfindung liegt daher die Aufgabe zugrunde, die Überfahrt eines Kraftfahrzeugs über einen Bordstein in einfacher Weise zu bestimmen, so dass eine fehlerhafte Odometrie gegebenenfalls korrigiert werden kann.

Diese Aufgabe wird durch ein Verfahren zum Erkennen einer Bordsteinüberfahrt mit den Merkmalen des Anspruchs 1, eine Vorrichtung zum Erkennen einer Bordsteinüberfahrt mit den Merkmalen des Anspruchs 6, ein Verfahren zur odometrischen Berechnung der Fahrzeugposition unter Berücksichtigung einer Bordsteinüberfahrt mit den Merkmalen des Anspruchs 7 sowie einen Parklenkassistenten mit den Merkmalen des Anspruchs 10 gelöst. Bevorzugte Ausgestaltungen der Erfindung sind Gegenstand der Unteransprüche.

Das erfindungsgemäße Verfahren zum Erkennen einer Bordsteinüberfahrt eines Kraftfahrzeugs bei einem Rangiermanöver mit einer Geschwindigkeit kleiner oder gleich 10 km/h, wobei Radsensoren der Räder des Kraftfahrzeugs jeweils Radgeschwindigkeit und Fahrtrichtung ermitteln, weist die folgenden Schritte auf:
fortlaufende Auswertung der Radgeschwindigkeit jedes Rades,
Identifizierung einer Bordsteinüberfahrt, wenn ein Rad eine positive Beschleunigung für ein vorgegebenes Zeitintervall und mindestens eines der anderen Räder eine negative Beschleunigung für dieselbe Zeitdauer aufweist.

Auf diese Weise ist es auf eine einfache Art ohne den Einsatz zusätzlicher Sensorik möglich eine Bordsteinüberfahrt zu erkennen und beispielsweise bei der odometrischen Bestimmung der Fahrzeugposition oder der Trajektorie eines Parklenkassistenten zu berücksichtigen.

Vorzugsweise wird eine Bordsteinüberfahrt erkannt, wenn die Geschwindigkeitsdifferenz zwischen Maximalgeschwindigkeit und Anfangsgeschwindigkeit der ansteigenden Flanke des Beschleunigungssignals eines Rades innerhalb der vorgegebenen Zeitdauer oberhalb einer vorgegebenen Schwelle liegt, wobei die vorgegebene Schwelle eine Funktion der Anfangsgeschwindigkeit ist. Auf diese Weise wird sichergestellt, dass keine zufälligen Effekte als Bordsteinüberfahrt identifiziert werden.

Insbesondere kann die vorgegebene Schwelle als Kennlinie vorliegen, wodurch eine schnelle Beurteilung einer gemessenen Geschwindigkeitsdifferenz möglich ist.

Vorzugsweise ist das vorgegeben Zeitintervall kleiner oder gleich 0,2 Sekunden, insbesondere gleich 0,11 Sekunden. Erstreckt sich daher die gemessene Geschwindigkeitsdifferenz, d.h. die gemessene Beschleunigung, eines Rades über ein längeres Zeitintervall, so hat diese Beschleunigung andere Ursachen als eine Bordsteinüberfahrt.

Weiter bevorzugt wird eine Bordsteinüberfahrt dann als sicher identifiziert, wenn bei einem Rad eine positive Beschleunigung und bei zwei der drei verbleibenden Räder eine Rückwärtsfahrt und eine fallende Geschwindigkeit für die vorgegebene Zeitdauer vorliegen. Durch diese Plausibilisierung werden Fehler bei der Erkennung einer Bordsteinüberfahrt weiter minimiert.

Die erfindungsgemäße Vorrichtung zum Erkennen einer Bordsteinüberfahrt eines Kraftfahrzeugs bei einem Rangiermanöver mit einer Geschwindigkeit kleiner oder gleich 10 km/h unter Verwendung des im Vorangegangenen beschriebenen Verfahrens weist an jedem Rad des Kraftfahrzeugs angeordnete Sensoren zur Erzeugung von Radsignalen, eine Einrichtung zur Bestimmung der Radgeschwindigkeit und der Fahrrichtung des Rades aus den Radsignalen, sowie eine Einrichtung zur Bestimmung von Beschleunigungen aus den Radgeschwindigkeiten und eine Einrichtung zu Identifizierung einer Bordsteinüberfahrt anhand der ermittelten Beschleunigungen und Fahrtrichtungen der Räder auf.

Das erfindungsgemäße Verfahren zur odometrischen Berechnung der Fahrzeugposition unter Berücksichtigung einer Bordsteinüberfahrt unter Verwendung des im Vorangegangenen beschriebenen Verfahrens berücksichtigt bei der Berechnung der Kraftfahrzeugposition unter Verwendung der gemessenen Radimpulse den durch eine erkannte Bordsteinüberfahrt entstandenen Odometriefehler.

Vorzugsweise erfolgt die Korrektur der Odometrie durch eine Berücksichtigung eines festen Korrekturwertes für den Weg des Rades, welches eine Bordsteinüberfahrt durchgeführt hat. Es ist auch möglich, den während der Bordsteinüberquerung zurückgelegten Weg des bordsteinüberquerenden Rades durch die zurückgelegten Wege der anderen Räder zu korrigieren.

Der erfindungsgemäße Parklenkassistent unter Verwendung des im Vorangegangenen beschriebenen Verfahrens zur odometrischen Berechnung der Fahrzeugposition unter Berücksichtigung einer Bordsteinüberfahrt, weist eine Vorrichtung zum Erkennen einer Bordsteinüberfahrt eines Kraftfahrzeugs bei einem Rangiermanöver mit einer Geschwindigkeit kleiner oder gleich 10 km/h und eine Einrichtung zur Berücksichtigung des Odometriefehlers für die Berechnung der Einparktrajektorie auf.

Eine bevorzugte Ausführungsform der Erfindung wird nachfolgende anhand der Zeichnungen erläutert, Dabei zeigt
- Fig. 1: eine schematische Darstellung des zurückgelegten Wegs eines Rades bei einer Bordsteinüberfahrt,
- Fig. 2: ein Beispiel einer Erkennung einer Bordsteinüberfahrt anhand eines Diagramms von Radgeschwindigkeiten gegenüber der Zeit, und
- Fig. 3: der Schwellwert der Geschwindigkeitsdifferenz als Funktion der Anfangsgeschwindigkeit.

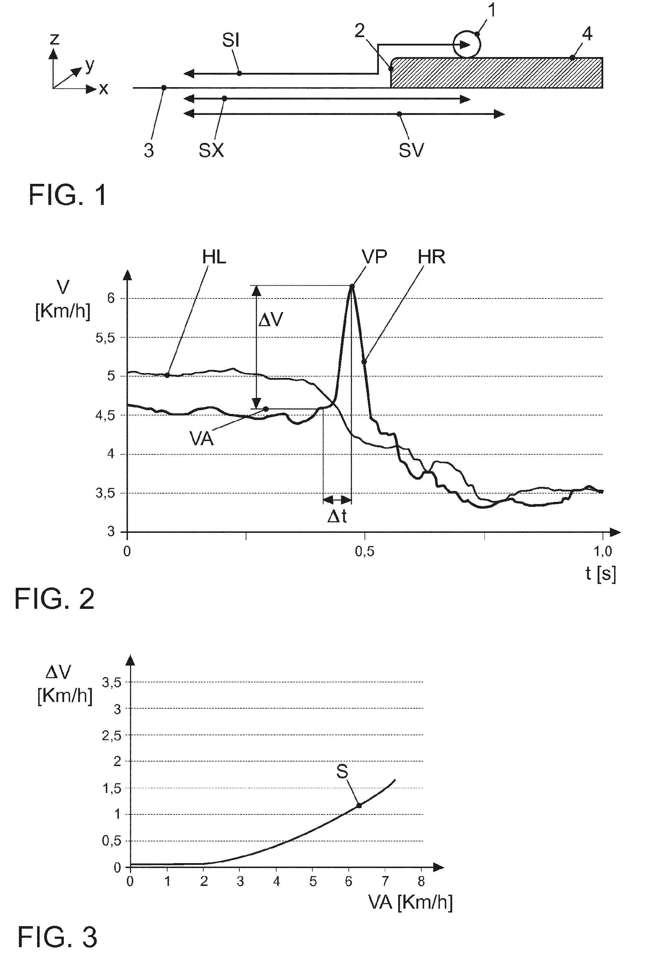

Fig. 1 erläutert den Odometriefehler bei der Positionsbestimmung eines Kraftfahrzeugs während eines Rangiermanövers anhand eines Beispiels. Für die Odometrie bewegt sich das Kraftfahrzeug nur in der X-Y-Ebene und eine Bewegung in die senkrecht dazu stehende Z-Richtung ist nicht vorgesehen, wie dies durch das X-Y-Z-Koordinatensystem in Fig. 1 verdeutlicht werden soll. In der Fig. 1 ist in schematischer Weise die Bewegung eines Rades 1 eines nicht dargestellten Kraftfahrzeugs, welches von einer Fahrbahn 3 kommend über einen Bordstein 2 auf einen erhöhten Parkplatz oder Parkstreifen 4 gefahren ist. Dabei wird der Einfachheit halber in dem Beispiel de Fig. 1 vorausgesetzt, dass die Bewegung des Rades 1 geradlinig entlang der X-Achse erfolgt ist.

Das Rad 1 ist in üblicher Weise mit einem Radsensor zur Erzeugung von Radimpulsen ausgerüstet, wobei jeder Radimpuls einer vom Rad 1 zurückgelegten Wegstrecke entspricht. Die obere Kurve SI zeigt die tatsächliche, nach Radimpulsen zurückgelegte Strecke beim Überfahren des Bordseins 2. Die tatsächliche, nach Radimpulsen zurückgelegte Wegstrecke SI setzt sich zusammen aus einem ersten Teil in X-Richtung entlang der Fahrbahn 3, einem zweiten Teil in Z-Richtung zur Überwindung des Bordsteins 2 und einem dritten Teil wieder in X-Richtung auf der Oberfläche des Parkstreifens 4.

Es ist offensichtlich, dass das Rad 1 bezüglich seiner realen Position auf der Oberfläche des Parkstreifens 4 in der Projektion auf die X-Y-Ebene eine Wegstrecke SX zurückgelegt hat, welches die für die Positionsbestimmung des Fahrzeugs zu verwendende Position sein sollte. Da die auf den Radsensoren basierende Odometrie keine Bewegung in Z-Richtung erkennen kann, mit anderen Worten die Odometrie ist auf die X-Y-Ebene beschränkt, ist die Odometrie anhand der Radimpulse der Ansicht, dass in der X-Y-Ebene die vermeintliche oder virtuelle Wegstrecke SV zurückgelegt wurde. Dies führt zwangsläufig zu Fehlern bei der Positionsbestimmung und daher beispielsweise zu Fehlern bei der Trajektorienberechnung eines Parklenkassistenten, wenn zum Erreichen eines Parkstreifens 4 ein Bordstein 2 überquert werden muss.

Fig. 2 zeigt ein Beispiel der Erkennung einer Bordsteinüberfahrt während eines rückwärtigen Einparkvorgangs anhand der Radgeschwindigkeiten V in km/h als Funktion der Zeit t in Sekunden. Dargestellt sind jeweils der Verlauf der Geschwindigkeit des linken sowie des rechten Hinterrades in Form der Radgeschwindigkeitskurve HL des linken Hinterrades und der Radgeschwindigkeitskurve HR des rechten Hinterrades, beide als Funktion der Zeit t.

Zur Zeit t=0s bewegt sich das linke Hinterrad mit einer Geschwindigkeit von ca. 5 km/h, während das rechte Hinterrad eine Geschwindigkeit von ca. 4,5 km/h aufweist. Nach etwas weniger als eine ½ Sekunde weist die Radgeschwindigkeitskurve HR des rechten Hinterrades innerhalb eines Zeitintervalls Δt einen Anstieg auf eine Geschwindigkeit von etwas über 6 km/h auf, d.h. es erfolgt eine Beschleunigung des rechten Hinterrades. Nach dem Erreichen des Spitzenwertes von 6 km/h erfolgt ein ebenso starker Abfall der Geschwindigkeit auf den Ausgangswert von ca. 4,5 km/h, wobei nachfolgend die Geschwindigkeit weiter auf einen Wert von ca. 3,5 km/h zur Zeit t=1 s absinkt.

Parallel zu der Flanke des Geschwindigkeitsanstiegs des rechten Hinterrades im Zeitintervall Δt fällt die Geschwindigkeit des linken Hinterrades ab. Es erfolgt also eine Verzögerung des linken Hinterrades, d.h. das linke Hinterrad wird im Zeitintervall Δt abgebremst. Nachdem das rechte Hinterrad die Ausgangsgeschwindigkeit von ca. 4,5 km/h nach der Beschleunigungsphase mit anschließendem Geschwindigkeitsabfall wieder erreicht hat und die Geschwindigkeit des rechten Hinterrades ebenfalls weiter abfällt, sind die Geschwindigkeitsverläufe HR, HL beider Räder ab einem Zeitpunkt t =0,6s im Wesentlichen wieder gleich und ab einem Zeitpunkt von t=1s haben beide Räder die gleiche Geschwindigkeit, was bedeutet, dass nun das Fahrzeug in Fahrzeuglängsrichtung mit geringer Geschwindigkeit rückwärtsfährt, wie dies bei einem rückwärtigen Einparkvorgang üblicherweise zur Ausrichtung des Fahrzeugs üblich ist.

Im Zeitintervall Δt der Fig. 2 fährt das rechte Hinterrad über einen Bordstein und wird dabei ausgehend von einer Anfangsgeschwindigkeit VA auf eine Spitzengeschwindigkeit VP stark beschleunigt, was der dargestellten ansteigenden Flanke der Geschwindigkeitsdifferenz ΔV entspricht. Durch die Beschleunigung des rechten Hinterrades aufgrund der Bordsteinüberfahrt erfolgt gleichzeitig eine Verzögerung des linken Hinterrades im Zeitintervall Δt, so dass das Auftreten der beschriebenen Merkmale der beiden Räder, nämlich eine Beschleunigung des einen Rades bei einer gleichzeitigen Verzögerung des anderen Rades ein starkes Indiz für eine Bordsteinüberfahrt sind und daher zur Identifizierung einer Bordsteinüberfahrt verwendet werden kann. Um nun auf eine Bordsteinüberfahrt schließen zu können, muss die Beschleunigung eines Rades innerhalb eines vorgegebenen Zeitintervalls Δt erfolgen, welches kleiner oder gleich 0,2 Sekunden ist, wobei das Zeitintervall Δt insbesondere 0,11 Sekunden beträgt. Ist das Zeitintervall Δt der Beschleunigung eines Rades größer als das angegebene Intervall, so hat die Beschleunigung eine andere Ursache als eine Bordsteinüberfahrt.

Um ein Ereignis, wie das in Fig. 2 dargestellte, sicher als eine Bordsteinüberfahrt identifizieren zu können, kann zur Plausibilisierung noch verlangt werden, dass neben der Beschleunigung eines Rades innerhalb des vorgegebenen Zeitintervalls noch Bedingungen für zwei der drei anderen Räder gestellt werden, nämlich dass innerhalb des vorgegebenen Zeitintervalls ein Rad eine Rückwärtsfahrt und eine weiteres abgebremst wird, wie dies bereits beschrieben wurde.

Fig. 3 zeigt den Verlauf der Schwelle S bezüglich der Geschwindigkeitsdifferenz als Funktion der Anfangsgeschwindigkeit VA, oberhalb der die Geschwindigkeitsdifferenz ΔV eines in Fig. 2 dargestellten Beschleunigungspeaks eines Rades liegen muss, um als Bordsteinüberfahrt gewertet zu werden. Eine Berücksichtigung der in Fig. 3 dargestellten Schwelle S ist notwendig, um kleine Schwankungen der Geschwindigkeit eines Rades als Bordsteinüberfahrten ausschließen zu können. Der Fig. 3 ist weiter zu entnehmen, dass die Schwelle S für steigende Anfangsgeschwindigkeiten des Einparkvorgangs zunimmt.

### Bezugszeichenliste

- 1: Rad
- 2: Bordstein
- 3: Fahrbahn
- 4: Parkstreifen

- SI: zurückgelegte Strecke nach Radimpulsen
- SX: tatsächlich zurückgelegte Strecke in X-Richtung
- SV: virtuell zurückgelegte Strecke in X-Richtung

- V: Radgeschwindigkeit
- VA: Anfangsgeschwindigkeit
- VP: Spitzengeschwindigkeit
- ΔV: Geschwindigkeitsdifferenz
- t: Zeit
- Δt: Zeitintervall
- HL: Geschwindigkeitskurve des Rades hinten links
- HR: Geschwindigkeitskurve des Rades hinten rechts
- S: Geschwindigkeitsdifferenzschwelle

## Patentansprüche

1. Verfahren zum Erkennen einer Bordsteinüberfahrt (2) eines Kraftfahrzeugs bei einem Rangiermanöver mit einer Geschwindigkeit kleiner oder gleich 10 km/h, wobei Radsensoren der Räder des Kraftfahrzeugs jeweils Radgeschwindigkeit und Fahrtrichtung ermitteln, **gekennzeichnet durch** die Schritte
fortlaufende Auswertung der Radgeschwindigkeit jedes Rades,
Identifizierung einer Bordsteinüberfahrt, wenn ein Rad (1) eine positive Beschleunigung für ein vorgegebenes Zeitintervall (Δt) und mindestens eines der anderen Räder eine negative Beschleunigung für dasselbe Zeitintervall (Δt) aufweist.

2. Verfahren nach Anspruch 1, **dadurch gekennzeichnet, dass** eine Bordsteinüberfahrt (2) erkannt wird, wenn die Geschwindigkeitsdifferenz (ΔV) zwischen Maximalgeschwindigkeit (VP) und Anfangsgeschwindigkeit (VA) der ansteigenden Flanke des Beschleunigungssignals eines Rades innerhalb der vorgegebenen Zeitdauer (Δt) oberhalb einer vorgegebenen Schwelle (S) liegt, wobei die vorgegebene Schwelle (S) eine Funktion der Anfangsgeschwindigkeit (VA) ist.

3. Verfahren nach Anspruch 2, **dadurch gekennzeichnet, dass** die vorgegebene Schwelle (S) als Kennlinie vorliegt.

4. Verfahren nach einem der vorangegangenen Ansprüche, **dadurch gekennzeichnet, dass** das vorgegebene Zeitintervall (Δt) kleiner oder gleich 0,2 Sekunden, insbesondere gleich 0,11 Sekunden, ist.

5. Verfahren nach einem der vorangegangenen Ansprüche, **dadurch gekennzeichnet, dass** ein Bordsteinüberfahrt (2) als sicher identifiziert ist, wenn bei einem Rad eine positive Beschleunigung und bei zwei der drei verbleibenden Räder eine Rückwärtsfahrt und eine fallende Geschwindigkeit für die vorgegebene Zeitdauer (Δt) vorliegt.

6. Vorrichtung zum Erkennen einer Bordsteinüberfahrt eines Kraftfahrzeugs bei einem Rangiermanöver mit einer Geschwindigkeit kleiner oder gleich 10 km/h unter Verwendung des Verfahrens nach einem der vorangegangenen Ansprüche mit an jedem Rad des Kraftfahrzeugs angeordnete Sensoren zur Erzeugung von Radsignalen, einer Einrichtung zur Bestimmung der Radgeschwindigkeit und der Fahrrichtung des Rades aus den Radsignalen, **dadurch gekennzeichnet, dass**
die Vorrichtung eine Einrichtung zur Bestimmung von Beschleunigungen aus den Radgeschwindigkeiten und
eine Einrichtung zur Identifizierung einer Bordsteinüberfahrt anhand der ermittelten Beschleunigungen und Fahrtrichtungen der Räder aufweist.

7. Verfahren zur odometrischen Berechnung der Fahrzeugposition unter Berücksichtigung einer Bordsteinüberfahrt unter Verwendung des Verfahrens nach einem der Ansprüche 1 bis 5, **dadurch gekennzeichnet, dass**
bei der Berechnung der Kraftfahrzeugposition unter Verwendung der gemessenen Radimpulse der durch eine erkannte Bordsteinüberfahrt verursachte Odometriefehler berücksichtigt wird.

8. Verfahren nach Anspruch 7, **dadurch gekennzeichnet, dass** die Korrektur durch eine Berücksichtigung eines festen Korrekturwertes für den Weg des Rades erfolgt, welches eine Bordsteinüberfahrt durchgeführt hat.

9. Verfahren nach Anspruch 7, **dadurch gekennzeichnet, dass** der während der Bordsteinüberquerung zurückgelegte Weg des bordsteinüberfahrenden Rades durch die zurückgelegten Wege der anderen Räder korrigiert wird.

10. Parklenkassistent unter Verwendung des Verfahrens zur odometrischen Berechnung der Fahrzeugposition unter Berücksichtigung einer Bordsteinüberfahrt nach einem der Ansprüche 7 bis 9, wobei der Parklenkassistent eine Vorrichtung zum Erkennen einer Bordsteinüberfahrt eines Kraftfahrzeugs bei einem Rangiermanöver mit einer Geschwindigkeit kleiner oder gleich 10 km/h und eine Einrichtung zur Berücksichtigung des Odometriefehlers für die Berechnung der Einparktrajektorie aufweist.

## Claims

1. Method for detecting when a kerbstone has been driven over (2) by a motor vehicle during a positioning manoeuvre at a speed of less than or equal to 10 km/h, wheel sensors of the wheels of the motor vehicle each determining the wheel speed and direction of travel,
**characterized by** the steps of
continuously evaluating the wheel speed of each wheel,
identifying when a kerbstone has been driven over if one wheel (1) has acceleration for a predefined interval of time (Δt) and at least one of the other wheels has deceleration for the same interval of time (Δt).

2. Method according to Claim 1, **characterized in that** it is detected when a kerbstone has been driven over (2) if the speed difference (ΔV) between the maximum speed (VP) and the initial speed (VA) of the rising edge of the acceleration signal from a wheel within the predefined period (Δt) is above a predefined threshold (S), the predefined threshold (S) being a function of the initial speed (VA).

3. Method according to Claim 2, **characterized in that** the predefined threshold (S) is in the form of a characteristic curve.

4. Method according to one of the preceding claims, **characterized in that** the predefined interval of time (Δt) is less than or equal to 0.2 seconds, in particular equal to 0.11 seconds.

5. Method according to one of the preceding claims, **characterized in that** a situation in which a kerbstone has been driven over (2) is identified as certain if there is acceleration for one wheel and there is reversing for two of the three remaining wheels and there is a falling speed for the predefined period (Δt).

6. Apparatus for detecting when a kerbstone has been driven over by a motor vehicle during a positioning manoeuvre at a speed of less than or equal to 10 km/h using the method according to one of the preceding claims, having sensors which are arranged on each wheel of the motor vehicle and are intended to generate wheel signals, and a device for determining the wheel speed and the direction of travel of the wheel from the wheel signals,
**characterized in that**
the apparatus has a device for determining accelerations from the wheel speeds, and
a device for identifying when a kerbstone has been driven over using the determined accelerations and directions of travel of the wheels.

7. Method for odometrically calculating the vehicle position taking into account when a kerbstone has been driven over using the method according to one of Claims 1 to 5,
**characterized in that**
the odometry error caused by a detected situation in which a kerbstone has been driven over is taken into account when calculating the motor vehicle position using the measured wheel pulses.

8. Method according to Claim 7, **characterized in that** the correction is carried out by taking into account a fixed correction value for the path of the wheel which has driven over a kerbstone.

9. Method according to Claim 7, **characterized in that** the distance covered by the wheel driving over a kerbstone while crossing the kerbstone is corrected by means of the distances covered by the other wheels.

10. Parking steering assistant using the method for odometrically calculating the vehicle position taking into account when a kerbstone has been driven over according to one of Claims 7 to 9, the parking steering assistant having an apparatus for detecting when a kerbstone has been driven over by a motor vehicle during a positioning manoeuvre at a speed of less than or equal to 10 km/h and a device for taking into account the odometry error for calculating the parking trajectory.

## Revendications

1. Procédé de détection d'un franchissement de la bordure (2) par un véhicule automobile lors d'un mouvement de manoeuvre avec une vitesse inférieure ou égale à 10 km/h, des capteurs de roue des roues du véhicule automobile déterminant respectivement la vitesse de roue et le sens de la marche,
**caractérisé par** les étapes suivantes
interprétation en continu de la vitesse de roue de chaque roue,
identification du franchissement d'une bordure lorsqu'une roue (1) présente une accélération positive pendant un intervalle de temps (Δt) prédéfini et au moins une des autres roues une accélération négative pendant le même intervalle de temps (Δt).

2. Procédé selon la revendication 1, **caractérisé en ce qu'**un franchissement de bordure (2) est détecté lorsque la différence de vitesse (ΔV) entre la vitesse maximale (VP) et la vitesse initiale (VA) du front montant du signal d'accélération d'une roue à l'intérieur d'un intervalle de temps (Δt) prédéfini est supérieure à un seuil (S) prédéfini, le seuil (S) prédéfini étant une fonction de la vitesse initiale (VA).

3. Procédé selon la revendication 2, **caractérisé en ce que** le seuil (S) prédéfini est disponible sous la forme d'une courbe caractéristique.

4. Procédé selon l'une des revendications précédentes, **caractérisé en ce que** l'intervalle de temps (Δt) prédéfini est inférieur ou égal à 0,2 seconde, notamment égal à 0,11 seconde.

5. Procédé selon l'une des revendications précédentes, **caractérisé en ce qu'**un franchissement de bordure (2) est identifié avec certitude lorsqu'une roue présente une accélération positive et deux des trois roues restantes présentent une marche arrière et une vitesse décroissante pendant l'intervalle de temps (Δt) prédéfini.

6. Dispositif de détection d'un franchissement de la bordure par un véhicule automobile lors d'un mouvement de manoeuvre avec une vitesse inférieure ou égale à 10 km/h en utilisant le procédé selon l'une des revendications précédentes, comprenant des capteurs de roue montés sur chaque roue du véhicule automobile pour générer des signaux de roue, un appareil servant à déterminer la vitesse de roue et le sens de la marche de la roue à partir des signaux de roue, **caractérisé en ce que**
le dispositif possède un appareil destiné à déterminer des accélérations à partir des vitesses de roue et
un appareil destiné à identifier le franchissement d'une bordure au moyen des accélérations et des sens de la marche déterminés des roues.

7. Procédé de calcul odométrique de la position d'un véhicule en tenant compte d'un franchissement de la bordure en utilisant le procédé selon l'une des revendications 1 à 5, **caractérisé en ce que** lors du calcul de la position du véhicule automobile en utilisant les impulsions de roue mesurées, l'erreur d'odométrie provoquée par le franchissement de bordure détecté est prise en compte.

8. Procédé selon la revendication 7, **caractérisé en ce que** la correction est effectuée par une prise en compte d'une valeur de correction fixe pour le trajet de la roue qui a effectué un franchissement de la bordure.

9. Procédé selon la revendication 7, **caractérisé en ce que** le trajet parcouru par la roue qui franchit la bordure pendant le franchissement de la bordure est corrigé par les trajets parcourus par les autres roues.

10. Assistant au stationnement employant le procédé de calcul odométrique de la position d'un véhicule en tenant compte d'un franchissement de la bordure selon l'une des revendications 7 à 9, l'assistant au stationnement possédant un dispositif de détection d'un franchissement de la bordure par un véhicule automobile lors d'un mouvement de manoeuvre avec une vitesse inférieure ou égale à 10 km/h et un appareil destiné à tenir compte de l'erreur d'odométrie pour le calcul de la trajectoire d'entrée en stationnement.
